# EUROPÄISCHE PATENTSCHRIFT

(11) **EP 1 877 293 B1**
(45) Veröffentlichungstag und Bekanntmachung des Hinweises auf die Patenterteilung: **23.07.2014**
(21) Anmeldenummer: 06722736.3
(22) Anmeldetag: 31.03.2006
(51) Int. Cl.: B62D 5/06, F16K 17/196, F15B 1/027, F15B 1/26, F16K 24/00

(54) **HYDRAULISCHES LENKHILFESYSTEM MIT LADEVENTIL UND LUFTPOLSTER IM TANK**
HYDRAULIC POWER STEERING SYSTEM WITH CHARGING VALVE AND AIR CUSHION IN THE TANK
SYSTEME D'ASSISTANCE HYDRAULIQUE DE DIRECTION A SOUPAPE DE CHARGE ET COUSSIN D'AIR DANS UN RESERVOIR

(30) Priorität: 23.04.2005 DE 102005019059
(43) Veröffentlichungstag der Anmeldung: 16.01.2008
(73) Patentinhaber: Magna Powertrain Bad Homburg GmbH, 61352 Bad Homburg v. d. Höhe (DE)
(72) Erfinder: PARSCH, Willi, 64342 Seeheim (DE)
(74) Vertreter: Rausch, Gabriele
(86) Internationale Anmeldenummer: PCT/DE2006/000585
(87) Internationale Veröffentlichungsnummer: WO 2006/114074

(56) Entgegenhaltungen:
- EP-A- 0 253 917
- GB-A- 1 322 878
- GB-A- 2 069 724
- GB-A- 2 232 648

## Beschreibung

Die Erfindung betrifft ein hydraulisches Lenkhilfesystem mit einem Tank und mit einer Lenkhelfpumpe, welche Druckmittel aus einem Saugbereich ansaugt und unter Druck ins Lenkhilfesystem fördert.

Derartige Lenkhilfesysteme sind bekannt. Dabei ergibt sich das Problem, dass Kavitation durch zu niedrige Saugdrücke an der Lenkhelfpumpe auftritt und damit die Drehzahl und die Förder menge der Lenkhelfpumpe beschränkt ist. Anderenfalls erfordern derartige Lenkhelfpumpen aufwendige, teure Injektorkonstruktionen, um höhere Saugdrücke zu realisieren.

Weiterhin ist aus dem Stand der Technik (D2, GB 2232648 A) ein gattungsgemäßes Servolenkungssystem bekannt, bei welchem das komplette Hydrauliksystem gegenüber der Atmosphäre abgedichtet ist und wobei der Druck im Tank 17 durch einen Gasdruckspeicher 18 auf einen Druck vorgespannt wird, welcher größer als der Atmosphärendruck ist. Dauer ist das zusätzliche Bauteil eines Gasdruckspeichers aufwendig und bedarf eines zusätzlichen Gasdrucksensors 19.

In der D1 (GB 13 22 878) ist eine sogenannte "Breather Assembly" auf einem Behälter angeordnet. Diese Breather Assembly soll ermöglichen, dass Luft aus der Atmosphäre in den Behälter eindringt, wenn der interne Druck unterhalb des Atmosphärendruckes sinkt. Diese Belüftungs- oder Beatmungseinrichtung soll also verhindem, dass bei einem Behälter, welcher eine Pumpe mit Fluid versorgt und welcher auf einen Druck über den Atmosphärendruck vorgespannt ist, der interne Druck des Behälters unter den Atmosphärendruck fällt.

Es ist Aufgabe der Erfindung, ein hydraulisches Lenkhilfesystem darzustellen, welches diesen Aufwand und damit diese Nachteile nicht aufweist.

Die Aufgabe wird gelöst durch ein hydraulisches Lenkhilfesystem mit einem Tank und mit einer Lenkhelfpumpe, welche Druckmittel aus einem Saugbereich ansaugt und unter Druck ins Lenkhilfesystem fördert, wobei der Saugbereich des Lenkhilfesystems hermetisch durch eine Ventilvorrichtung von der Atmosphäre abgekoppelt ist und die Ventilvorrichtung zum Aufbau eines Vorspanndruckes im Saugbereich ausgeführt ist, dadurch gekennzeichnet, dass die Ölsäule im Tank als Kolben zur Vorspannung oder Ansaugung der Luft im Saugbereich wirkt. Bevorzugt wird ein Lenkhilfesystem, bei welchem die Ventilvorrichtung ein Rückschlagventil zum Luftansaugen bei Unterdruck im Saugbereich aufweist und ein Druckbegrenzungsventil bzw. Vorspannventil zum Luftablassen bei Überdruck im Saugbereich aufweist.

Erfindungsgemäß ist also erkannt worden, dass die Abkoppelung des Niederdruckbereichs bzw. Saugbereichs eines Lenksystems von der Atmosphäre durch Verwendung eines hermetischen Tanks bzw. eines hermetisch abgedichteten Saugbereiches in Verbindung mit einer Zusatzeinrichtung, welche das erforderliche Druckniveau im Saugbereich regelt, zu einer Verbesserung des Ansaugdruckes der Pumpe führt. In heute üblichen Lenksystemen ändert sich durch den Temperaturgang während des Betriebes ständig der Pegelstand des Druckmittels im Behälter bzw. Tank. Über eine Entlüftung wird dafür gesorgt, dass man immer Ausgleichsdruck zur Umgebung hat, unabhängig vom Pegelstand im Behälter. Ersetzt man die Entlüftung durch ein selbstansaugendes Druckbegrenzungsventil, kann man die Pegeländerungen des Öls in Verbindung mit diesem Ventil dazu nutzen, den Behälterinnendruck und damit den Saugdruck der Pumpe gezielt zu regeln. Dabei übernimmt die Flüssigkeitssäule im Tank die Funktion einer Kolbenpumpe.

Ein erfindungsgemäßes Lenkhilfesystem zeichnet sich dadurch aus, dass der Öffnungsdruck des Rückschlagventils kleiner ist, ggf. wesentlich kleiner als der Öffnungsdruck des Druckbegrenzungsventils. Das hat den Vorteil, dass bei niedrigen Temperaturen schon durch geringes Abfallen des Druckes im Behälter das Rückschlagventil öffnet und Luft aus der Umgebung in den Behälter gesaugt wird, bis annähernd ein Druckausgleich zur Atmosphäre erreicht ist. Die Druckdifferenz, welche am Rückschlagventil abfällt, soll also möglichst klein sein. Bei ansteigenden Temperaturen im Betrieb durch den Ölpegelanstieg im Tank und durch dieses zusätzliche Luftvolumen wird dann ein Überdruck im System erzeugt. Bei Überschreiten eines definierten Druckes kann jederzeit durch das Druckbegrenzungsventil wieder Luft abgeblasen werden. Der Druck im Saugbereich ist so ohne weitere Hilfsmittel selbständig einregelbar, und der maximale Ansaugdruck der Lenkhelfpumpe wird durch den Öffnungsdruck dieses Druckbegrenzungsventils bestimmt. Eine Voreinstellung des Systems beim Öffnen des Behälters oder bei der Erstbefüllung ist nicht zwingend erforderlich, da nach dem Start durch Erwärmung des Systems diese Effekte selbsttätig eintreten.

Bevorzugt wird ein Lenkhilfesystem, bei welchem beide Ventilfunktionseinheiten als eine Ventilvorrichtung bzw. Ventilbaugruppe in einem gemeinsamen Ventilgehäuse angeordnet sind. Das hat den Vorteil, dass beide Ventilfunktionseinheiten, also die für die vorher beschriebenen Funktionen notwendige Ventilbaugruppe, als eine Einheit im Saugbereich angeordnet werden können und dort beispielsweise diese Einheit gegen eine Befüllkappe eines Tanks bzw. Behälters ausgetauscht werden kann. Somit können vorhandene Systeme leicht auf Druckvorspannung im Saugbereich umgestellt werden. Es können auch vorhandene Behälter nachgerüstet werden.

Ein erfindungsgemäßes Lenkhilfesystem zeichnet sich dadurch aus, dass die Ventilsitzhülse des Rückschlagventils gleichzeitig mit dem Schließkörper des Rückschlagventils, insbesondere einer Kugel, einen Druckbegrenzungsventilkolben darstellt. Auch wird ein Lenkhilfesystem bevorzugt, bei dem die Druckbegrenzungsfunktion realisiert wird, indem die Ventilsitzhülse mit dem Rückschlagventilschließkörper bzw. der Kugel gegen einen Aufstoßbolzen fährt, welcher den Schließkörper bzw. die Kugel vom Sitz wegdrückt, also das Rückschlagventil öffnet. Das Rückschlagventil wird also einmal durch Unterdruck im Saugbereich gegen seine Schließfeder geöffnet und ein zweites Mal durch einen Bolzen bei Überdruck im Saugbereich. Das Rückschlagventil weist damit zwei verschiedene Betätigungsarten auf.

Bevorzugt wird ein Lenkhilfesystem, bei welchem der Aufstoßbolzen an einer Hülse mit Durchlassöffnungen angeordnet ist. Das hat den Vorteil, dass der Aufstoßbolzen durch die Hülse sicher geführt wird und trotzdem eine Luftdurchführung von der Atmosphäre in den Tank innerhalb des Ventilgehäuses durch die Durchlassöffnungen möglich ist.

Auch wird ein Lenkhilfesystem bevorzugt, bei welchem der Schließkörper bzw. die Kugel des Rückschlagventils durch eine erste, schwache Feder gegen des Sitz gedrückt wird. Die schwache Feder sorgt dafür, dass das Rückschlagventil schon bei einem geringen Unterschreiten des Atmosphärendrucks im Saugbereich öffnet und damit den Druckausgleich und den Anstieg des Luftvolumens im Behälter gewährleistet.

Weiterhin wird ein Lenkhilfesystem bevorzugt, bei welchem die Ventilsitzhülse durch eine zweite, stärkere Feder gegen einen Anschlag im Ventilgehäuse gedrückt wird, also weg vom Aufstoßbolzen. Das hat den Vorteil, dass durch die stärkere Feder in Verbindung mit der Kolbenfläche, welche die Druckbegrenzungsfunktion wahrnimmt, ein entsprechend hoher Vorspann- bzw. Aufladedruck für den Saugbereich der Lenkhelfpumpe einstellbar ist.

Auch wird ein Lenkhilfesystem bevorzugt, bei welchem das Ventilgehäuse eine Ventilsitzhülse, ein Kugelrückschlagventil, eine erste Feder, eine zweite stärkere Feder, einen Aufstoßbolzen mit einer Hülse mit Durchlassöffnungen und eine Öffnung zur Atmosphäre aufweist. Das hat den Vorteil, dass diese eine Ventilbaugruppe zwei Ventilfunktionen konstruktiv in sich vereint, nämlich die eines Rückschlagventils und eines Druckbegrenzungsventils, und damit an beliebigen Orten im Saugbereich des Lenkhilfesystems einsetzbar ist bzw. dort vorhandene Belüftungseinrichtungen ersetzen kann, um so den Saugbereich unter Atmosphärendruck gegen einen Saugbereich mit Vorspanndruck abzuändern.

Auch wird ein Lenkhilfesystem bevorzugt, bei welchem das Ventilgehäuse im oder am Tank, oder am Tankdeckel angeordnet ist.

Ein erfindungsgemäßes Lenkhilfesystem zeichnet sich dadurch aus, dass die Ölsäule im Tank als Kolben zur Vorspannung bzw. zur Ansaugung der Luft im Saugbereich bzw. Tank wirkt. Der Pegelstand im Tank ändert sich laufend durch den Temperaturgang des Öls und des Lenksystems während des Betriebs. Diese Änderung des Pegelstandes kann man zur Ansaugung und Komprimierung der Restluft im Öltank benutzen, indem man die Ölsäule im Tank als Kolben benutzt.

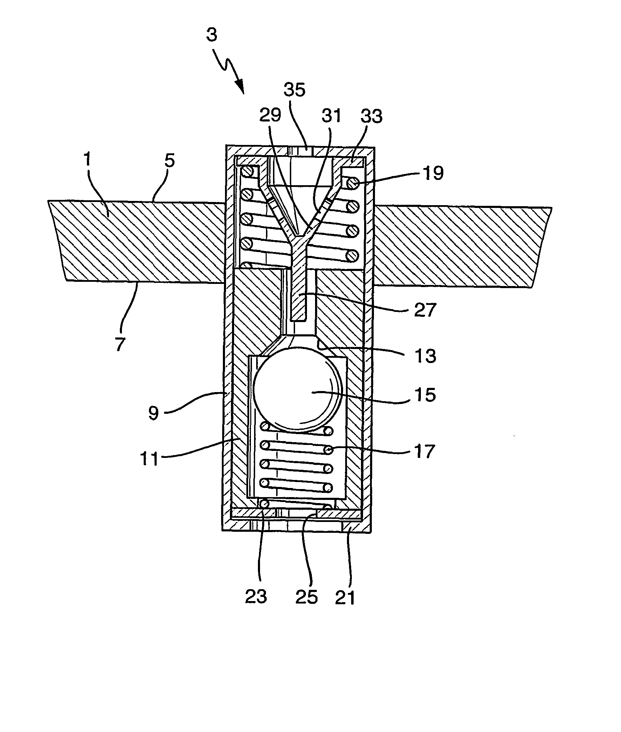

Weiterhin wird ein Lenkhilfesystem bevorzugt, bei welchem durch die Vorspannung der Luft im Tank bzw. Saugbereich der Ansaugdruck der Lenkhelfpumpe erhöht wird. Das hat den Vorteil, dass Kavitation bei hohen Drehzahlen bzw. großen Fördermengen vermieden werden kann und gegebenenfalls teure Injektorkonstruktionen unnötig sind. Die Erfindung wird nun anhand der Figur beschrieben:

Die Figur zeigt im Querschnitt eine erfindungsgemäße Ventilvorrichtung.

In einer Wand 1 eines Ölbehälters bzw. Tanks, welche beispielsweise zu dem Behälterdeckel gehören kann, ist eine erfindungsgemäße Ventilvorrichtung 3 angeordnet. Während auf der Seite 5 der Behälterwand Atmosphärendruck herrscht, ist die Seite 7 der Behälterwand 1 dem Saugbereich des Lenkhilfesystems zugewandt, stellt also die Innenseite des Ölbehälters dar. Der ÖIbehälter selbst und der Saugbereich des Lenkhilfesystems sind gegenüber dem Umgebungsdruck hermetisch abgedichtet. Die Ventilvorrichtung 3 weist ein Ventilgehäuse 9 auf. Im Ventilgehäuse 9 ist eine Ventilsitzhülse 11 verschieblich gelagert. Die Ventilsitzhülse 11 enthält einen kegeligen Ventilsitz 13, welcher als Ventilsitz für einen Schließkörper 15 in Gestalt einer Kugel dient. Die Kugel 15 und der Ventilsitz 13 sind zur besseren Kenntlichmachung der Einzelteile im geöffneten Zustand dargestellt, tatsächlich würde die Kugel 15 aber durch eine erste, relativ schwache Feder 17 gegen den Ventilsitz 13 gedrückt. Eine zweite, wesentlich stärkere Feder 19 drückt die Ventilsitzhülse 11 gegen einen Anschlag 21 des Ventilgehäuses 9. Die Feder 17 stützt sich dabei auf einer Lagerscheibe 23 ab, welche eine Öffnung 25 zum Innenraum des Tanks hin aufweist. Im oberen Teil des Ventilgehäuses 9 ist ein Aufstoßbolzen 27 an einer Abstützhülse 29 angeordnet, welche Durchlassöffnungen 31 aufweist und sich mit einem Kragen 33 innerhalb des Ventilgehäuses 9 gegen die zweite Feder 19 abstützt. Das Ventilgehäuse 9 weist weiterhin eine Öffnung 35 zur Atmosphäre hin auf.

Die Funktion der erfindungsgemäßen Ventilvorrichtung wird wie folgt beschrieben: Fällt der Druck innerhalb des Behälters, also im Bereich auf der Seite 7, in Folge niedriger Öltemperaturen bzw. niedriger Ölstandspegel im Behälter unter ein voreingestelltes Niveau, welches durch den Schließdruck des Rückschlagventils, durch die Kugel 15 und die Feder 17 gebildet, einstellbar ist, öffnet das Rückschlagventil 15, wie in der Figur dargestellt, und es wird Luft aus der Umgebung, also dem Bereich 5, durch die Öffnung 35 und durch die Öffnungen 31 vorbei an dem Aufstoßstift 27 und am Rückschlagventilkolben 15 durch die Öffnung 25 hindurch in den Behälter gesaugt, bis in etwa ein Druckausgleich zur Atmosphäre erreicht ist. Der Druck wird etwas niedriger als der Atmosphärendruck sein, was durch die Druckdifferenz, bedingt durch die Feder 17 und die Kolbenfläche 15 des Rückschlagventils definiert wird.

Bei ansteigenden Temperaturen des Druckmittels im Betrieb wird durch den Anstieg des Druckmittelpegels und damit durch Verdichten dieses zusätzlichen Luftvolumens zu dem schon vorhandenen Luftvolumen als auch durch Erwärmen und Ausdehnen der Luft ein Überdruck innerhalb des Hydrauliksystems im Saugbereich erzeugt. Bei Überschreiten eines maximalen Druckes, der jetzt durch die Summe der Kolbenfläche des Rückschlagventils 15 und der Kolbenfläche der Ventilsitzhülse 11 gegen die zweite Feder 19 definiert wird, verschiebt sich die Ventilsitzhülse 11 nach oben, bis die Kugel 15 gegen den Aufstoßbolzen 27 fährt und damit die Kugel 15 von ihrem Sitz 13 hinwegdrückt wird. Damit ist kein weiterer Druckanstieg im Ansaugbereich möglich, der Druck bleibt auf dem Niveau, welches durch die Feder 19 und die beiden zusammenwirkenden Druckwirkflächen des so genannten Druckbegrenzungsventils definiert ist. Der maximale Druck im Ansaugbereich, also der Vorspanndruck, ist also so ohne weitere Hilfsmittel selbstständig einstellbar.

Integriert man die Ventilvorrichtung 3 direkt in die Befüllkappe eines Ölbehälters, können vorhandene Systeme leicht auf vorgespannte Systeme umgestellt werden. Es können vorhandene Behälter nachgerüstet werden. Eventuell muss das Lenkgetriebe und die Lenkhelfpumpe für höhere Saugdrücke oder Stillstandsdrücke ausgelegt werden. Vorteil der Erfindung ist auf jeden Fall, dass durch den vorgespannten Ansaugdruck ein kavitationsfreier Betrieb von Lenkhelfpumpen bei deutlich höheren Drehzahlen bzw. Fördermengen möglich ist.

### Bezugszeichenliste

- 1: Wand eines Ölbehälters
- 3: Ventilvorrichtung
- 5: Behälterwandseite mit Atmosphärendruck
- 7: Behälterwandseite im Saugbereich
- 9: Ventilgehäuse
- 11: Ventilsitzhülse
- 13: kegeliger Ventilsitz
- 15: Schließkörper (Kugel)
- 17: erste, schwache Feder
- 19: zweite, stärkere Feder
- 21: Anschlag des Ventilgehäuses 9
- 23: Lagerscheibe
- 25: Öffnung zum Innenraum des Tanks
- 27: Aufstoßbolzen
- 29: Abstützhülse
- 31: Durchlassöffnungen der Abstützhülse 29
- 33: Kragen der Abstützhülse 29
- 35: Öffnung des Ventilgehäuses 9 zur Atmosphäre

## Patentansprüche

1. Hydraulisches Lenkhilfesystem mit einem Tank und mit einer Lenkhelfpumpe, welche Druckmittel aus einem Saugbereich ansaugt und unter Druck ins Lenkhilfesystem fördert, **dadurch gekennzeichnet, dass** der Saugbereich des Lenkhilfesystems durch eine Ventilvorrichtung von der Atmosphäre abgekoppelt ist und die Ventilvorrichtung (3) zum Aufbau eines Vorspanndruckes im Saugbereich ausgeführt ist, **dadurch gekennzeichnet, dass** die Ölsäule im Tank als Kolben zur Vorspannung oder Ansaugung der Luft im Saugbereich wirkt.

2. Lenkhilfesystem nach Anspruch 1, **dadurch gekennzeichnet, dass** die Ventilvorrichtung (3) ein Rückschlagventil zum Luftansaugen bei Unterdruck im Saugbereich aufweist und ein Druckbegrenzungsventil bzw. Vorspannventil zum Luftablassen bei Überdruck im Saugbereich aufweist.

3. Lenkhilfesystem nach Anspruch 2, **dadurch gekennzeichnet, dass** der Öffnungsdruck des Rückschlagventils kleiner als der Öffnungsdruck des Druckbegrenzungsventils ist.

4. Lenkhilfesystem nach Anspruch 2 oder Anspruch 3, **dadurch gekennzeichnet, dass** beide Ventilfunktionseinheiten als eine Ventilvorrichtung (3) in einem gemeinsamen Ventilgehäuse (9) angeordnet sind.

5. Lenkhilfesystem nach Anspruch 2 bis Anspruch 4, **dadurch gekennzeichnet, dass** eine Ventilsitzhülse (11) des Rückschlagventils gleichzeitig mit dem Schließkörper (15) des Rückschlagventils, insbesondere einer Kugel, einen Druckbegrenzungsventilkolben darstellt.

6. Lenkhilfesystem nach Anspruch 5, **dadurch gekennzeichnet, dass** die Druckbegrenzungsfunktion realisiert wird, indem die Ventilsitzhülse (11) und der Rückschlagventilschließkörper (15) gegen einen Aufstoßbolzen (27) fährt, welcher den Schließkörper (15) vom Sitz (13) wegdrückt, also das Rückschlagventil öffnet.

7. Lenkhilfesystem nach Anspruch 6, **dadurch gekennzeichnet, dass** der Aufstoßbolzen (27) an einer Hülse (29) mit Durchlassöffnungen (31) angeordnet ist.

8. Lenkhilfesystem nach Anspruch 5 bis Anspruch 7, **dadurch gekennzeichnet, dass** der Schließkörper (15) des Rückschlagventils durch eine erste, schwache Feder (17) gegen den Sitz gedrückt wird.

9. Lenkhilfesystem nach Anspruch 8, **dadurch gekennzeichnet, dass** die Ventilssitzhülse (11) durch eine zweite, stärkere Feder (19) gegen einen Anschlag (21) im Ventilgehäuse (9) gedrückt wird, also weg vom Aufstoßbolzen (27).

10. Lenkhilfesystem nach Anspruch 5 bis Anspruch 9, **dadurch gekennzeichnet, dass** das Ventilgehäuse (9) eine Ventilsitzhülse (11), ein Kugelrückschlagventil (15), eine erste schwache Feder (17), eine zweite stärkere Feder (19), einen Aufstoßbolzen (27) mit einer Hülse (29) mit Durchlassöffnungen (31) und eine Öffnung (35) zur Atmosphäre aufweist.

11. Lenkhilfesystem nach Anspruch 4 bis 10, **dadurch gekennzeichnet, dass** das Ventilgehäuse (9) im oder am Tank oder am Tankdeckel angeordnet ist.

12. Lenkhilfesystem nach einem der vorhergehenden Ansprüche, **dadurch gekennzeichnet, dass** durch die Vorspannung der Luft im Tank bzw. Saugbereich der Ansaugdruck der Lenkhelfpumpe erhöht wird.

## Claims

1. Hydraulic power steering system having a tank and a power steering pump which draws pressure media from a suction area and conveys said media under pressure into the power steering system, **characterised in that** the suction area of the power steering system is decoupled by a valve device from the atmosphere and the valve device (3) is designed to build up a preload pressure in the suction area, **characterised in that** the oil column in the tank acts as a piston for preload or suction of the air in the suction area.

2. Power steering system according to claim 1, **characterised in that** the valve device (3) has a non-return valve for air suction in case of negative pressure in the suction area and has a pressure limiting valve or preload valve for releasing air in case of excess pressure in the suction area.

3. Power steering system according to claim 2, **characterised in that** the opening pressure of the non-return valve is lower than the opening pressure of the pressure limiting valve.

4. Power steering system according to claim 2 or claim 3, **characterised in that** both valve function units are arranged as a valve device (3) in a common valve housing (9).

5. Power steering system according to claims 2 to 4, **characterised in that** a valve seat sleeve (11) of the non-return valve simultaneously with the closing body (15) of the non-return valve, in particular of a ball, constitutes a pressure limit valve piston.

6. Power steering system according to claim 5, **characterised in that** the pressure limiting function is realised by the valve seat sleeve (11) and the non-return valve closing body (15) travelling towards a push pin (27) which pushes the closing body (15) away from the seat (13), thus opening the non-return valve.

7. Power steering system according to claim 6, **characterised in that** the push pin (27) is arranged on a sleeve (29) with passage openings (31).

8. Power steering system according to claims 5 to 7, **characterised in that** the closing body (15) of the non-return valve is pushed by a first, weak spring (17) towards the seat.

9. Power steering system according to claim 8, **characterised in that** the valve seat sleeve (11) is pushed by a second, stronger spring (19) against a stop (21) in the valve housing (9), thus away from the push pin (27).

10. Power steering system according to claims 5 to 9, **characterised in that** the valve housing (9) has a valve seat sleeve (11), a ball non-return valve (15), a first, weak spring (17), a second, stronger spring (19), a push pin (27) with a sleeve (29) with passage openings (31) and an opening (35) to the atmosphere.

11. Power steering system according to claims 4 to 10, **characterised in that** the valve housing (9) is arranged in or on the tank or on the tank cover.

12. Power steering system according to one of the preceding claims, **characterised in that** the suction pressure of the power steering pump is increased by the preload of the air in the tank or suction area.

## Revendications

1. Système d'assistance hydraulique de direction comprenant un réservoir et une pompe d'assistance de direction, laquelle aspire des moyens sous pression en provenance d'une zone d'aspiration et refoule ces derniers sous pression dans le système d'assistance de direction, **caractérisé en ce que** la zone d'aspiration du système d'assistance de direction est désaccouplée de l'atmosphère par un dispositif de soupape, et **en ce que** le dispositif de soupape (3) est réalisé pour créer une pression de précontrainte dans la zone d'aspiration, **caractérisé en ce que** la colonne d'huile dans le réservoir présente l'action d'un piston servant à précontraindre ou à aspirer l'air dans la zone d'aspiration.

2. Système d'assistance de direction selon la revendication 1, **caractérisé en ce que** le dispositif de soupape (3) présente une soupape de non-retour servant à aspirer l'air en présence d'une dépression dans la zone d'aspiration et une soupape de limitation de pression ou une soupape de précontrainte servant à évacuer l'air en présence d'une surpression, dans la zone d'aspiration.

3. Système d'assistance de direction selon la revendication 2, **caractérisé en ce que** la pression d'ouverture de la soupape de non-retour est inférieure à la pression d'ouverture de la soupape de limitation de pression.

4. Système d'assistance de direction selon la revendication 2 ou la revendication 3, **caractérisé en ce que** les deux unités fonctionnelles de soupape sont disposées comme un dispositif de soupape (3) dans un carter de soupape (9) commun.

5. Système d'assistance de direction selon la revendication 2 à la revendication 4, **caractérisé en ce qu'**une douille de siège de soupape (11) de la soupape de non-retour constitue à la fois avec le corps de fermeture (15) de la soupape de non-retour, en particulier d'une sphère, un piston de soupape de limitation de pression.

6. Système d'assistance de direction selon la revendication 5, **caractérisé en ce que** la fonction de limitation de pression est réalisée **en ce que** la douille de siège de soupape (11) et le corps de fermeture de soupape de non-retour (15) se déplacent contre un goujon de refoulement (27) qui pousse le corps de fermeture (15) de manière à l'éloigner du siège (13), donc qui ouvre la soupape de non-retour.

7. Système d'assistance de direction selon la revendication 6, **caractérisé en ce que** le goujon de refoulement (27) est disposé au niveau d'une douille (29) avec des orifices de passage (31).

8. Système d'assistance de direction selon la revendication 5 à la revendication 7, **caractérisé en ce que** le corps de fermeture (15) de la soupape de non-retour est poussé par un premier ressort (17) faible contre le siège.

9. Système d'assistance de direction selon la revendication 8, **caractérisé en ce que** la douille de siège de soupape (11) est poussée par un deuxième ressort (19) plus fort contre une butée (21) dans le carter de soupape (9), donc de manière à s'éloigner du goujon de refoulement (27).

10. Système d'assistance de direction selon la revendication 5 à la revendication 9, **caractérisé en ce que** le carter de soupape (9) présente une douille de siège de soupape (11), une soupape de non-retour sphérique (15), un premier ressort faible (17), un deuxième ressort plus fort (19), un goujon de refoulement (27) doté d'une douille (29) munie d'orifices de passage (31) et un orifice (35) menant vers l'atmosphère.

11. Système d'assistance de direction selon la revendication 4 à la revendication 10, **caractérisé en ce que** le carter de soupape (9) est disposé dans ou au niveau du réservoir ou au niveau du couvercle de réservoir.

12. Système d'assistance de direction selon l'une quelconque des revendications précédentes, **caractérisé en ce que** la pression d'aspiration de la pompe d'assistance de direction est augmentée par la précontrainte de l'air dans le réservoir ou dans la zone d'aspiration.
